# EUROPEAN PATENT APPLICATION

(11) **EP 0 618 579 A2**
(43) Date of publication of application: **05.10.1994**
(21) Application number: 94105053.6
(22) Date of filing: 30.03.1994
(51) Int. Cl.: G11B 23/033, G11B 23/50

(54) **Diskette liner with bonded perimeter**

(30) Priority: 02.04.1993 US 42284
(71) Applicant: MINNESOTA MINING AND MANUFACTURING COMPANY, St. Paul, Minnesota 55133-3427 (US)
(72) Inventor: Dunbar, William M., c/o Minnesota Mining and, St. Paul, Minnesota 55133-3427 (US); Noyola, Joan M., c/o Minnesota Mining and, St. Paul, Minnesota 55133-3427 (US)
(74) Representative: VOSSIUS & PARTNER

(57) **Abstract**

Diskette liner (10, 11) with reduced tendency to have debris at cut edges because perimeter impregnated with polymer binder to bind loose fibers. Binder applied by flexographic printing process to fabric web.
Advantages: binder applied only as diskette liner perimeter pattern where it is cut from a larger web, so that the part which wipes the diskette is not made stiff; and the polymer binders work on rayon and other fabrics which are not thermoplastic (and thus not as amenable to thermal bonding).

## Description

This invention pertains to the field of magnetic recording diskettes, more specifically to diskettes having a jacket or shell lined with material for cleaning or wiping the magnetic recording surface.

Magnetic recording diskettes, particularly in the nominal 3.511 size, are commonly used for word processing and personal computer applications where relatively inexpensive, random access data storage is desired.

These diskettes generally comprise a flexible disk of magnetic recording material with a central hub, substantially enclosed in a plastic shell. The shell, comprising two opposing halves joined together, has a circular opening to accommodate the diskette hub and a rectangular head access window. The shell is designed to protect the magnetic recording surface from exposure to contaminants such as dust, smoke, hair and fingerprints which can disrupt the operation of the head.

Some contaminants manage to enter the shell through the aforementioned openings. For this reason, a diskette liner can be adhered inside each half of the shell by means known to the art in order to wipe the disk surface as it rotates. The liner is typically a soft nonwoven fabric piece cut to fit inside the shell and allow head access to the recording medium. An effective liner must have the ability to clean the disk surface (remove and hold stray particles and contaminants) while not causing scratching or excessive wear to the disk over millions of revolutions in the drive. Equally important, the liner should not itself be a source of debris and thus contribute to the possibility of signal error or loss of data.

A number of methods for forming diskette liners are known. Liners may be made from nonwoven fibers bonded together with an adhesive binder. Such liners typically contain between 20-50% by weight of binder to maintain fabric integrity. In another chemical bonding approach, U.S. Patent 5,060,105 describes a diskette liner formed of a web impregnated with a relatively low concentration of polymeric binder. The binder is evenly distributed throughout the web. Binders can stiffen the fabric and cause abrasion of the magnetic layer of a diskette.

Liners are cut from nonwoven web to the correct shape for installing in a diskette jacket or shell. A significant number of loose fibers, or stringers, can be generated at the cut edge of the liner. Once the liner is inside the assembled diskette, the loose fibers can detach from the liner and migrate to the magnetic recording surface. If the operation of the head is disrupted by the fiber, signal reduction or data loss may result.

A method for reducing such loose fibers is described in Japanese Kokai SHO 60-212884 (Takagi), see also U.S. Patent 4,655,348. In the Japanese reference, the liner is heat pressed around the entirety of its cut edges before being cut to prevent fraying. Japanese Patent Publication SHO 58-56170 (Nakamatsu) discloses a flexible disk jacket liner which is welded around the edges of a round drive shaft hole and an elongated head access hole. For thermal bonding to work well, it is normal to use a thermoplastic in the nonwoven fabric.

Control of debris associated with the manufacture and use of diskettes is a concern as high density diskettes storing more than 2 megabytes of data are developed. Reducing debris at the magnetic recording surface from all possible sources, including the liner, will enhance diskette performance.

The quality of the cut edges of diskette liner fabric has been improved by a new method comprising the steps of:
A. applying a binder polymer liquid to a fabric web in an outline pattern which corresponds to the perimeter of the diskette liner;
B. drying the binder on the web in order to bind the loose fibers in the fabric;
C. cutting the dry web into a shape suitable for use as a diskette liner, such that the cut edges of the fabric web lie at least partly within the outline pattern (although cutting wholly within the outline pattern is preferred).

The result is a diskette liner or wiping fabric for use in cleaning a magnetic recording medium surface comprising a fabric web having incorporated therein a binder material in an outline pattern, said pattern preferably corresponding to the perimeter of the diskette liner, the binder being present in sufficient quantity so that generation of loose fibers from the cut edges of the liner is substantially reduced, in comparison to such a liner without such a binder in a pattern. The binder will limit the generation of loose fibers and improve the die cutting process by reducing the deformation of the fabric when it is cut, i.e., stiffen the fabric in the area being cut.

The fabric is usually a nonwoven fabric, but could be a woven fabric or a flocked fiber fabric, as taught in U.S. Patent 4,417,291.

The invention will be described in detail in connection with the drawings.

Figure 1 is an exploded view of a diskette of the present invention.

Figure 2 is a process flow diagram for the process of making the inventive nonwoven fabric diskette liner.

Figure 3A depicts a portion of a printing plate used to apply binder to the nonwoven fabric web.

Figure 3B is a detail of the printing plate of Figure 3A showing a cross section of the raised portion which carries the binder.

Figure 4 is a detail of part of the process which shows imprinting of the outline pattern on the nonwoven web as it passes between the printing plate and the backup roll.

Figure 5 depicts a roll of nonwoven fabric having a plurality of outline patterns imprinted thereon, ready to be cut out for use in diskettes.

Figure 6 is a photomicrograph showing a cut edge of a nonwoven fabric which was not treated by the inventive process.

Figure 7 is a photomicrograph showing a cut edge of the inventive diskette liner fabric.

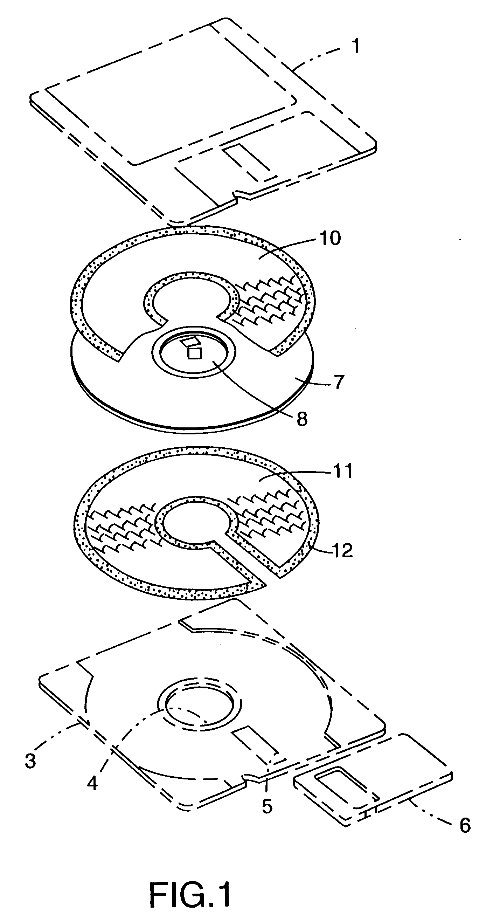

Referring to Figure 1, the basic parts of the inventive diskette are: first shell half 1; second shell half 3 in which there are the center hole 4 and the head access opening 5; shutter 6 which slides to cover the head access opening; magnetic recording medium disc 7 having hub 8; first and second diskette liners 10 and 11 on both sides of the recording medium disc, and shaped to fit within the inside of the respective diskette shell halves; and the outline pattern on the liner, shown as 12 on second liner 11, where the binder penetrates the fabric in a band around the entire perimeter of the liner.

The diskette shell halves may be made from a variety of synthetic resinous materials such as polyvinyl chloride, polystyrene, polycarbonate, polyester modified polypropylene oxide or acrylonitrile-butadiene-styrene resins (ABS). There are normally head access openings in both halves of the diskette, and the shutter is usually spring biased to the normally closed position. The hub 8 is accessible to a disk drive through the center hole 4. The liners 10 and 11 are fixed to the interior of the shell halves using ultrasonic welding or another known technique to prevent liner movement and obstruction of shell apertures.

There can be other features in the diskette, such as a write protect tab and format recognition features which are within the skill of the art. The diskette design shown is exemplary of the feasible designs and does not limit the types of diskettes to which this invention can be applied.

The liner is preferably made of a nonwoven fabric which is able to collect debris and contaminants without causing damage or wear to the magnetic recording disk surface. The nonwoven fabric web used for the liners is a loose matrix of fibers which have been entangled using air laying, hydroentanglement, carding, or some similar method known to the art. The fibers are preferably rayon due to its good cleaning properties, but may also be acrylic, polyester, nylon, polypropylene, cotton, wool, or a combination thereof. The fiber matrix usually is subjected to at least one of several types of bonding operations to bind individual fibers together and increase the internal strength of the web. Typical physical properties of the nonwoven web are: weight in the range of 29 to 41 grams per square meter, 35 grams/m² being preferred; thickness of 0.1 - 0.3 mm; tensile strength of about 0.27 kg/cm of width (1.5 lbs./in.); and coefficient of friction of about 0.29 - 0.44, preferably about 0.36.

Liquid polymer binders useful in this invention can be impregnated in a predetermined pattern on a nonwoven web and dried into a polymeric phase to effectively bind loose fibers in the web. Useful binders for fabric are known, as exhibited by U.S. patent 5,060,105; 4,702,957; 4,683,165; and 4,084,033. Acceptable binders exhibit the following three abilities: Wetting and penetrating the entire thickness of the nonwoven web; bonding the fibers of the web to one another; and drying to a flexible and nontacky form which can be cut cleanly, preferably without significant binder transfer to the blade of a die cutter and without significant debris generation.

In general, any synthetic polymer latex having these characteristics may be used as a binder in this invention. Synthetic latices are known for the purpose of binding nonwoven fabrics, and may be chosen from a number of available types, including polymers derived from the following monomers and monomer types:
vinyl acetates (such as ethylene vinyl acetate (EVA) and polyvinyl acetate); acrylics; nitriles, such as acrylonitrile butadiene copolymers; vinyl chlorides (e.g., ethylene vinyl chloride); styrene butadiene copolymers; and polyvinyl alcohol. Rhoplex B-15H acrylic latex manufactured by Rohm & Haas Company is exemplary of the liquid polymer binders useful in this invention.

The latices are aqueous emulsions. The glass transition temperatures of the polymers in the useful latices of this invention can typically be between about -20°C and 5°C, allowing the latex to coalesce when dried into a polymeric phase offering sufficient flexibility without excessive tackiness.

The latex may be combined with other materials to form a binder which achieves the results required by this invention. Additives may include thickeners, to increase viscosity; surfactants, to aid in wetting the nonwoven fibers; antistatic agents, to reduce the risk of static discharge at the magnetic recording surface; and external crosslinking agents to increase resilience and durability of the binder.

Other useful binders are adhesives, such as radiation (e.g., ultraviolet light or electron beam) curable polymers, which can be applied in a predetermined pattern to a nonwoven web and cured so as to bind loose fibers. Adhesives without organic solvents are preferred, since solvents can cause flexographic printing plates (described later in this specification) to swell.

To make the liner of the present invention, the binder can be applied to the nonwoven web in a controlled manner so as to produce the desired pattern. A new and unique form of flexographic printing is an effective method of application.

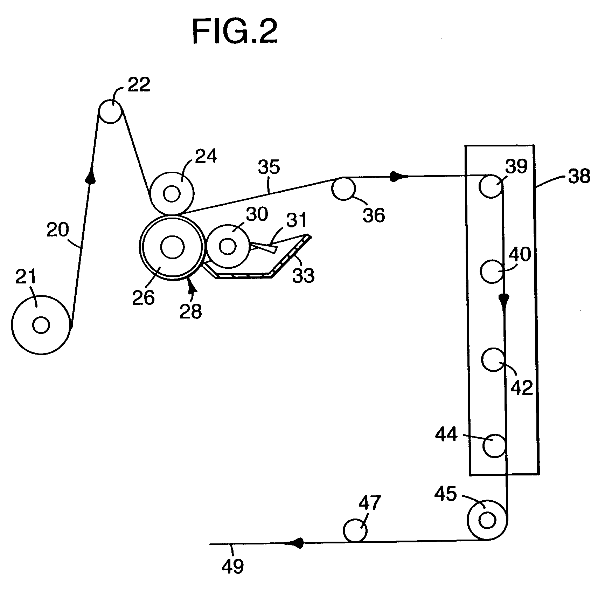

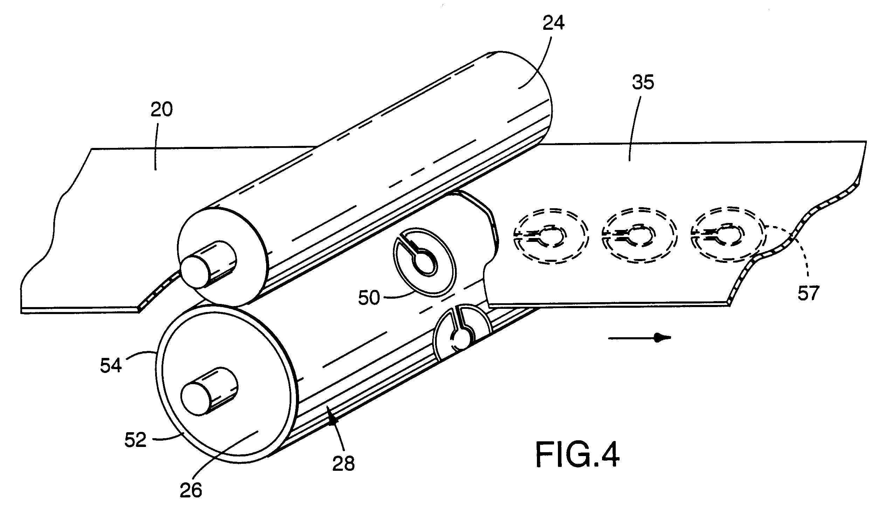

As shown in Figure 2, the binder can be applied in the following manner:
Nonwoven web 20 is unwound from feed roll 21, passed over idler roll 22 and into a nip between backup roll 24 and plate roll 26. Liquid binder in pan 33 is picked up by a gravure-patterned anilox roll 30. Excess binder is removed from the anilox roll 30 by doctor blade 31. Binder is then brought to a nip between anilox roll 30 and plate roll 26, where the liquid binder is transferred to modified flexographic plate 28, the plate being attached to the surface of plate roll 26. Liquid polymer binder is then applied to nonwoven web 20 from plate 28 in the wet outline pattern 57 (shown in Figure 4) while the web passes through the nip between rolls 26 and 24.

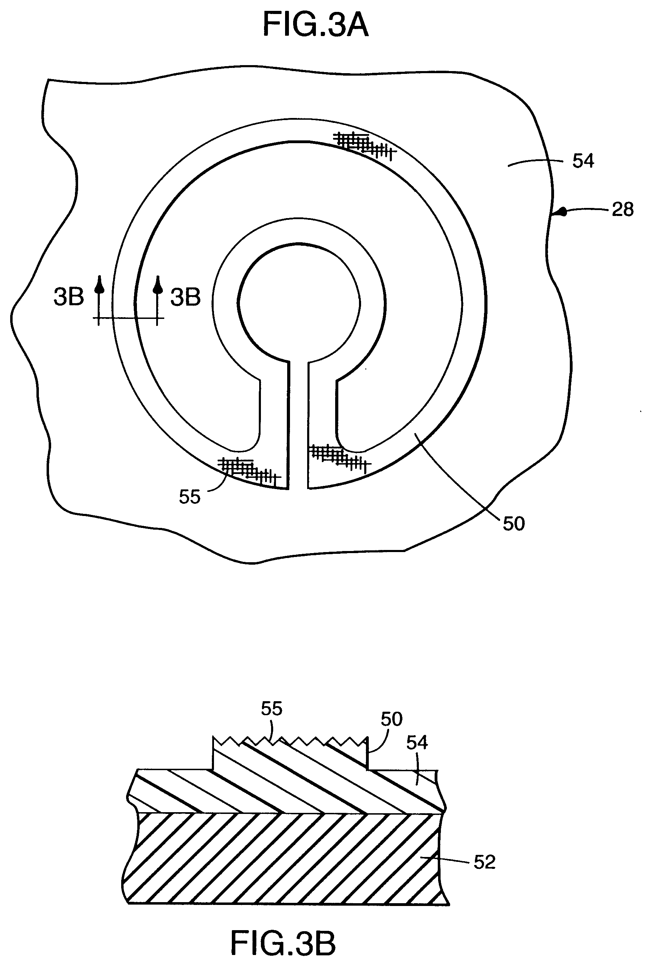

Modified flexographic plate 28 comprises a sheet of flexible polymeric material 54, which can be a photopolymer (curable by ultraviolet light), such as Cyrel polymer from E.I. DuPont de Nemours, Co., or natural or synthetic rubber. The plate has at least one, and preferably a plurality of raised areas 50 shown in Figure 3A, each in the shape of the outline of a diskette liner. These raised areas, known as image areas, accept binder from the anilox roll while the rest of the plate remains relatively dry. The image area is raised above the surface of the plate by a dimension suitable for printing, for example 0.8 mm. One preferred width of the printed outline image is about 6 mm.

Customarily, flexographic plates have a smooth, flat image area surface. The plate of the preferred embodiment of this invention has a plurality of indentations or grooves 55, which may be in a pattern like a gravure pattern, on the image area, as shown in Figure 3B, to facilitate the transfer of a liquid such as a polymeric emulsion to the web. one useful pattern is a mesh or cross-hatch pattern which forms a plurality of cells and in which there are 6 - 14 small grooves per centimeter, preferably about 9 grooves per centimeter. The depth of these small grooves is about 0.1 - 1.0 millimeters, preferably about 0.25 - 0.3 millimeters.

More latex can be applied with the flexographic plates having grooves and cells in the image area than in the case of smooth flexographic plates. Flexographic plates allow for quickly changing from one plate to another. Other advantages of this type of printing over gravure printing are: the flexographic plate can deform, giving good contact with the fabric and good penetration of the binder into the fabric; and the raised image area which eliminates or greatly reduces transfer of binder to unwanted areas of the fabric (which can happen with gravure printing).

Attached to the bottom of the sheet of flexible polymeric material 54 is an adhesive layer 52. The adhesive layer 52 can be a polymer sheet coated with adhesive (for example pressure sensitive adhesive) on both sides. This type of sheeting is called double sticky sheeting. The modified flexographic plate 28 is attached to the plate roll 26 by means of the adhesive layer 52. The use of double sticky sheeting facilitates changing from one flexographic plate to another.

Figure 4 shows a detailed view of the web passing through the coating step and emerging with a wet diskette outline pattern 57 printed on it. The pattern on the web is preferably uniform, with binder penetrating the web through its thickness such that the outline pattern is visible from the side of the web opposite the side on which the binder has been printed.

Those skilled in the art will appreciate that adjustment of binder viscosity, nip pressures, doctor blade pressure and the speed at which the nonwoven fabric web is conveyed through the coating process will affect the outline pattern quality. Binder viscosity is preferably no greater than 100 centipoise (cps), approximately 50 cps being more preferred. One useful web speed range is about 3 - 5 meters per minute. The pressures between the doctor blade and the anilox roll, between the plate roll and the anilox roll and between the plate roll and the backup roll generally range between 69 and 276 kilopascals (10 - 40 psi).

The patterned web 35 is passed over idler roll 36, which can be wrapped with a silicone coated paper or polymer sheet or coated with a release coating (such as polytetrafluoroethylene coating or silicone) to avoid transfer of binder to the roll. The patterned web enters drier 38 and passes over idler rolls 39, 40, 42, and 44 inside the drier. Typical temperatures in the drier range from 50° to 82° C, one useful temperature being 71° C.

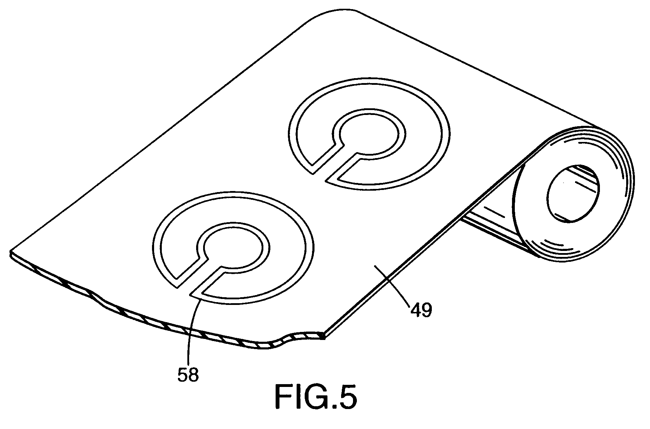

The dried web 49 passes over pacing roll 45 (a polymer-coated driven roll which controls the speed of the line) and idler roll 47. The dry web 49 having dried outline patterns 58 may then continue to be processed according to methods known in the art for assembly into finished diskettes, or wound into a roll as shown in Figure 5.

The method of application of binder to the nonwoven web is not limited to modified flexographic printing. other methods known in the coating art may be employed, such as screen printing, ink jet, gravure printing, spraying and the like. The diskette liners are cut from the dry web by cutting through the outline pattern by means known to the art, such as rotary die cutting. The liners are adhered or attached to the diskette shell halves by one of several techniques within the skill of the art such as ultrasonic bonding or heat staking (fusing the liner to the diskette shell half at a plurality of points, for example in a dot pattern).

A diskette containing the liner of this invention is expected to perform as well as or better than diskettes having liners already known in the art in recording media durability. To assess the cleaning ability of the diskette liner and the tendency of the liner to cause wear on the magnetic recording surface, the diskette can be subjected to a long term use test under controlled environmental conditions. The test is conducted in an NEC 1137 disk drive, which is a standard drive model for 3.511 diskettes. The set switch on the drive is adjusted so the drive will operate continuously at 300 rpm. In the drive, the head has been positioned to contact the outermost track on the diskette for the entire test. The drive is located inside a cabinet in which temperature and humidity can be controlled and recorded.

The test is initiated by inserting a diskette in the drive and closing the cabinet door. The diskette remains in the drive for the desired number of revolutions, or passes (10 million passes requires about 23 days of running time.) A predetermined 24-hour temperature/humidity cycle is automatically repeated throughout the test.

The diskette is removed and visually inspected twice per week during the test period. A numerical rating between 0 and 5 is recorded which reflects the degree of wear on the track which is in contact with the head. If scoring or removal of the magnetic coating is detected, the test is terminated and the diskette is judged a failure.

A high degree of wear on the test track may indicate that the liner is not effectively cleaning the magnetic recording surface. Debris which is not removed by the liner can become lodged under the head and cause abrasion or scoring of the magnetic coating.

The presence of wear on the remainder of the magnetic recording surface may also be noted when the diskette is inspected. This "off track wear" is indicative of an aggressive liner material, and liners causing such wear are generally not acceptable. The liner material itself may also be inspected for signs of deterioration during the test.

The invention will be further clarified by the following examples, which are intended to be purely exemplary and not limiting.

### Example 1

This example describes the production of a printed roll of the inventive diskette liner material using an acrylic latex binder. A roll of 9245 nonwoven fabric 12.7 cm. wide from Veratec (a subsidiary of International Paper Company in Walpole, Massachusetts) was used as the web material. The fabric, approximately 0.2 mm. (7.8 mils) thick with a 36 g/m² web weight, comprises 80% rayon and 20% nylon fibers. The nylon fibers are disposed in an inner layer between two outer layers of rayon fibers, and the layers are thermally bonded with a pattern of discrete recessed areas.

Rhoplex B-15H latex from Rohm & Haas Co. was used as the binder. This latex is an aqueous acrylic copolymer emulsion with 64% total solids, pH of 6.4, and T₃₀₀ of -4°C. (T₃₀₀ is a property described by the manufacturer as being approximately equal to Tg). The latex was used as supplied without dilution or additives.

The binder was applied to the web using a flexographic printing process as described in which:

The binder was picked up by a rotogravure roll having a 120 grooves/inch (47.2 grooves/cm) engraved pattern. A doctor blade was removing excess coating from this roll. The binder was transferred through a nip to a printing plate mounted on a plate roll. The printing plate was made of a flexible polymer material having three raised image areas in the diskette outline pattern. The three image areas had flat surfaces with three different widths: 1.6 mm, 3.2 mm, and 6.4 mm.

The binder was applied to the nonwoven fabric web as it passed through a nip between the plate roll and a steel backup roll at a speed of 3 to 4.6 re/min. The appearance and uniformity of the printed pattern were set by adjusting the doctor blade angle and pressure, and the pressures at the two nips. The web impregnated with latex in the outline pattern was then dried at 65.5 - 69.4°C and wound into a roll.

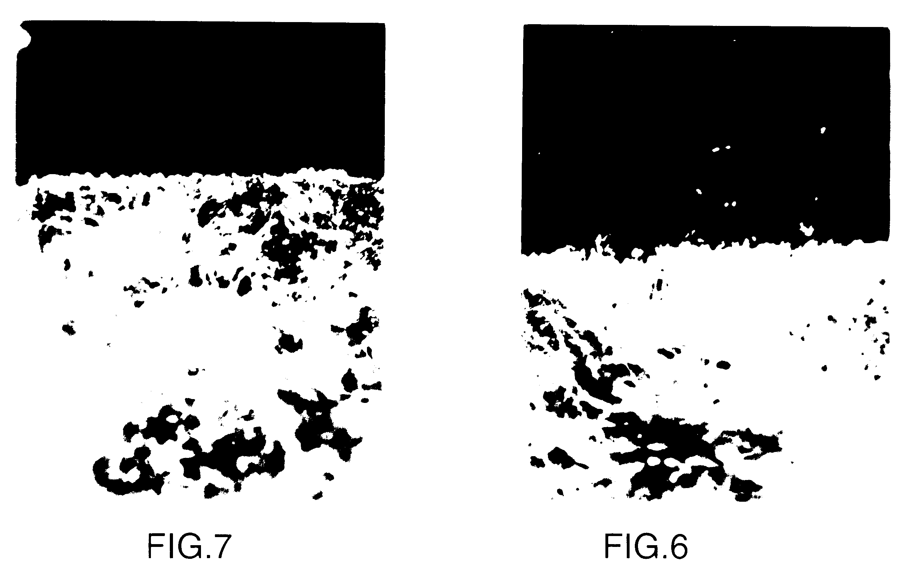

Cuts were made using scissors in printed and unprinted portions of the web. Figures 6 and 7 show photomicrographs at 50 times magnification of the cut edges. In Figure 6, it can be seen that the unprinted web has loose fibers at the cut edge. In Figure 7, the cut edge, having binder impregnated therein, is substantially clean and free of loose fibers.

### Example 2

Another roll of 9245 nonwoven fabric from Veratec, Inc. was printed with binder using the process described in Example 1. A different printing plate was used having four identical raised image areas. The image area surfaces were 6.4 mm wide and had a pattern of repeating indentations, as shown in Figures 3A and B. Cuts made with a razor blade in the printed portion of the web were visually cleaner than cuts made elsewhere in the web.

While using latex binder throughout the nonwoven fabric liner will increase its stiffness, making cutting easier, and reduce debris, it will stiffen the fabric in the area which is to wipe the magnetic recording medium disc. That would be detrimental to performance, possibly abrading the disc. on the other hand, using thermal bonding or heat pressing to reduce stringers at the perimeter of the liner is known, but does not work well in the case of materials which are not thermoplastic, such as rayon (which is an effective wiping material). The present invention uses latex (or other adhesive) bonding in just the outline pattern area which does not contact the recording disc, eliminating the stiffness problem in the wiping area, and it is useful with fabrics that are not thermoplastic.

## Claims

1. A method of making a diskette liner comprising the steps of:
A. applying a binder polymer liquid to a fabric web in an outline pattern which corresponds to the perimeter of the diskette liner;
B. drying the binder on the web;
C. cutting the dry web into a shape suitable for use as a diskette liner, such that the cut edges of the fabric lie at least partly within the outline pattern.

2. The method of claim 1 wherein step A is performed by means of a flexographic printing process in which the binder is printed on the fabric web by contacting the web with a polymeric printing plate having raised image areas corresponding to the outline pattern.

3. The method of claim 2 wherein the image areas of the polymeric printing plate have a multiplicity of grooves of sufficient depth and in sufficient number to improve transfer of the liquid polymer binder to the fabric web over such transfer in the absence of such grooves.

4. The method of claim 3 wherein the image areas of the polymeric printing plate have a multiplicity of grooves about 0.1 - 1.0 mm deep and at a spacing of about 6 - 14 grooves per centimeter.

5. A diskette liner for use in cleaning a magnetic recording medium surface comprising a fabric web having incorporated therein a binder material in an outline pattern, said pattern corresponding, at least in part, to the perimeter of the diskette liner, the binder being present in sufficient quantity to reduce generation of loose fibers from cut edges of the liner by comparison to such a liner without such a binder in a pattern, provided that the cut edges are at least partly within the outline pattern.

6. The diskette liner of claim 5 wherein the binder material is a polymer, useful in binding fibers together, and selected from the group consisting of vinyl acetate polymers, acrylic polymers, vinyl chloride polymers, nitrile rubbers, styrene butadiene copolymers, and polyvinyl alcohol.

7. The diskette liner of claim 5 or 6 in which the fabric is a non-woven fabric.

8. The dinette liner of any of claims 5 to 7 wherein the fabric is made of a fiber material selected from the group consisting of: rayon, acrylic, polyester, nylon, polypropylene, cotton, wool, and combinations thereof.

9. A fabric web on which is imprinted a plurality of outline patterns, which comprise polymer binder, on the fabric web in sufficient quantity to reduce generation of loose fibers from cut edges of the fabric web by comparison to such a fabric web without such a binder imprinted thereon, provided that the cut edges are at least partly within the outline pattern.

10. The fabric web of claim 9 wherein the outline pattern corresponds, at least in part, to the perimeter of a diskette liner.
